# EUROPEAN PATENT APPLICATION

(11) **EP 2 104 131 A1**
(43) Date of publication of application: **23.09.2009**
(21) Application number: 07860035.0
(22) Date of filing: 25.12.2007
(51) Int. Cl.: H01J 65/04, F21S 2/00, H05B 41/24

(54) **ELECTRODELESS DISCHARGE LAMP AND ILLUMINATION DEVICE EQUIPPED WITH SAME**

(30) Priority: 25.12.2006 JP 2006347704
(71) Applicant: Panasonic Electric Works Co., Ltd, Kadoma-shi Osaka 571-8686 (JP)
(72) Inventor: SAKAI, Kazuhiko, Kadoma-shi Osaka 571-8686 (JP); TSUZUKI, Yoshinori, Kadoma-shi Osaka 571-8686 (JP)
(74) Representative: DTS Zürich
(86) International application number: PCT/JP2007/074806
(87) International publication number: WO 2008/078734

(57) **Abstract**

In an electrodeless discharge lamp (1) which is lit with PWM light control, a discharge gas including krypton is filled in a bulb (10), so that restriking voltage can be decreased and thus, and oscillation of the ferrite core (22) which is inserted inside of a cavity (5) of the bulb (10) can be decreased, and thus, occurrence of undesired sound can be restrained.

## Description

### Technical Field

The present invention relates to an electrodeless discharge lamp and a lighting apparatus having the same which have no electrode in a bulb into which discharge gas is filled, generate high-frequency electromagnetic field by supplying high-frequency electric current to an induction coil so as to act on the discharge gas, and discharge the discharge gas.

### Background Art

The electrodeless discharge lamp is configured so that the discharge gas filled in the bulb is activated by the high-frequency electromagnetic field which is generated by supplying the high-frequency current in an induction coil, and ultra-violet rays emitted at that time is converted to visible rays by fluorescent material. Since the electrodeless discharge lamp device is configured to have no electrode inside, no non-lighting phenomenon occurs due to deterioration of the electrode, and thus, it has longevity life in comparison with general fluorescent lamp.

In the electrodeless discharge lamp disclosed, for example, in Japanese Laid-Open Patent Publication No. 7-272688 or Japanese Laid-Open Utility Model Publication No. 6-5006, a bismuth-indium-mercury amalgam is used as a source of supply of mercury vapor. Such amalgam has an advantageous merit that high light output is obtained stably from the electrodeless discharge lamp by using the same, even when ambient temperature is widely varied.

On the other hand, in order to realize high light output stably in the electrodeless discharge lamp, it is necessary to maintain mercury vapor pressure in the bulb in high value, and thus, time for reaching a temperature value which is necessary to get a predetermined mercury vapor pressure becomes longer. Therefore, the electrodeless discharge lamp generally has defect that rising-up is slow. In the electrodeless discharge lamp using a bismuth-indium-mercury amalgam, the consequence is provided that it requires approximately one minute to obtain the light output of 60% for the light output in stable lighting.

In order to solve such a problem, mercury drop is used in substitution for an amalgam in the electrodeless discharge lamp disclosed in Japanese Laid-Open Patent Publication No. 2001-325920. According to the description of this prior art document, the light output reached 50% of maximum output within two or three seconds after staring-up of the electrodeless discharge lamp. The reason comes from the fact that mercury drop is easy to evaporate at low temperature value in comparison with the amalgam, and the temperature value necessary to get predetermined mercury vapor pressure is lower. In other words, it is because a time for reaching the temperature value necessary to get the predetermined mercury vapor pressure is shorter. However, when the electrodeless discharge lamp is heavily loaded that input electric power is larger for volume of the bulb or when ambient temperature is higher, the temperature value in the bulb rises higher while the electrodeless discharge lamp is stably lit, so that mercury vapor pressure rises too much, and thus, light output in the stable lighting rather falls. Therefore, when using mercury drop, it is necessary to control the temperature value at the coldest spot (the point in a surface of the bulb where the temperature value is the lowest) which controls mercury vapor pressure. As for the temperature value at the coldest spot, it is preferable to be in a range of 35-45 degrees Celsius. In the Patent Publication, a projection is provided on the bulb, and the projection serves as the coldest spot. In the conventional electrodeless discharge bulb configured as above, it is possible to effluence evaporate mercury vapor in the bulb surely even when the ambient temperature extremely falls, so that it is effective to control the light, that is, to reduce input electric power to the electrodeless discharge lamp.

As for a light control method of the electrodeless discharge lamp, PWM (Pulse Width Modulation) light control which repeats ON-OFF of high frequency lighting operation is adopted. However, in such PWM light control method, the longer the OFF time becomes, the higher voltage is necessary at every restart. Such voltage is called "restriking voltage". The higher the restriking voltage becomes, the more the ferrite core inserted inside of a cavity of the bulb of the electrodeless discharge lamp oscillates, so that it touches with another ferrite core separately disposed or a heat radiation cylinder, and undesired sound occurs.

### Disclosure of Invention

The present invention is perceived to solve the above mentioned conventional problems, and a purpose of the present invention is to provide an electrodeless discharge lamp and a lighting apparatus using the same, which enables to decrease the restriking voltage in light control and to decrease the level of the undesired sound.

An electrodeless discharge lamp in accordance with an aspect of the present invention comprises a bulb formed of a transmittance material and filled by discharge gas and mercury therein, and a power coupler fitted into a cavity formed on the bulb and having an induction coil and a ferrite core for generating high-frequency electromagnetic field, wherein the induction coil is driven by supplying high-frequency electric current which is controlled by PWM, and the discharge gas filled in the bulb is only krypton or a mixture of krypton and another rare gas.

On the other hand, a lighting apparatus in accordance with an aspect of the present invention comprises: an electrodeless discharge lamp comprising a bulb formed of a transmittance material and filled by discharge gas and mercury therein, and a power coupler fitted into a cavity formed on the bulb and having an induction coil and a ferrite core for generating high-frequency electromagnetic field, wherein the induction coil is driven by supplying high-frequency electric current which is controlled by PWM, and the discharge gas filled in the bulb is only krypton or a mixture of krypton and another rare gas; and a lighting circuit to supply the high-frequency electric current which is controlled by PWM to the induction coil.

Since only krypton or a mixture of krypton and another rare gas is used as the discharge gas, it is possible to decrease the restriking voltage without damaging other characteristics of the electrodeless discharge lamp. Therefore, even when the high-frequency electric current which is supplied to the induction coil is controlled by the PWM, oscillations of the ferrite core or the like can be decreased, and thus, level of undesired sound can be decreased.

### Brief Description of Drawings

FIG. 1 is a sectional view showing a detailed configuration of an electrodeless discharge lamp in accordance with an embodiment of the present invention;
FIG. 2 is a sectional view showing a condition that a bulb and a power coupler of the electrodeless discharge lamp in FIG. 1 are separated;
FIG. 3 is a perspective view showing an example of a lighting apparatus using the above mentioned electrodeless discharge lamp;
FIG. 4 is a perspective view showing another example of a lighting apparatus using the above mentioned electrodeless discharge lamp;
FIG. 5 is a diagram showing a definition of an inner diameter "r" in a spherical portion of the bulb container;
FIG. 6 is a graph showing results of measurement of restriking voltages with varying discharge gas filled in the bulb with respect to the electrodeless discharge lamp in accordance with the above mentioned embodiment;
FIG. 7 is a graph showing results of measurement of efficiency under the same condition in the case of FIG. 6;
FIG. 8 is a graph showing results of measurement of restriking voltages similar to the case of FIG. 6 with changing the inner diameter of the bulb; and
FIG. 9 is a graph showing results of measurement of efficiency under the same condition in the case of FIG. 8.

### Best Mode for Carrying Out the Invention

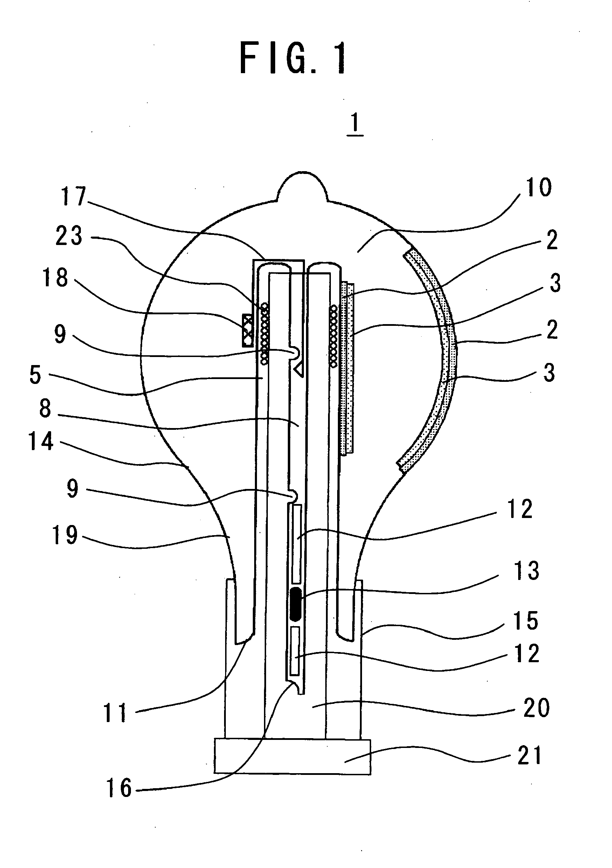

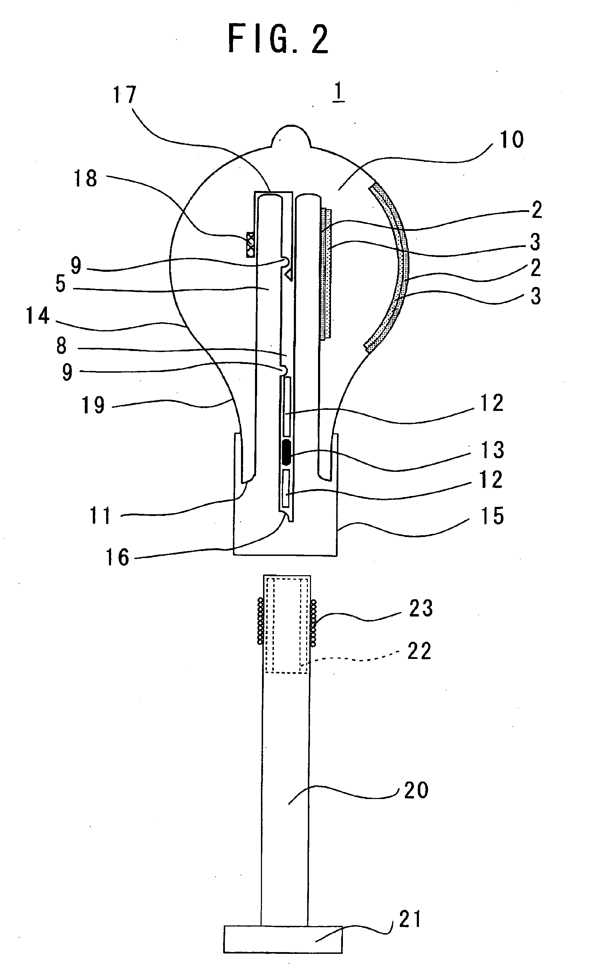

An electrodeless discharge lamp and a lighting apparatus using the same in accordance with an embodiment of the present invention are described with reference to the drawings. FIG. 1 shows a detailed configuration of the electrodeless discharge lamp 1 in accordance with this embodiment. The electrodeless discharge lamp 1 consists of a bulb 10 and a power coupler 20. In addition, FIG. 2 shows a condition that the bulb 1 and the power coupler 20 are separated.

The electrodeless discharge lamp 1 comprises the bulb 10 into which discharge gas and mercury controlled at a temperature of the coldest spot are filled, and the power coupler 20 which generates high-frequency electromagnetic field. The bulb 10 is a sealed container consists of an airtight container receptacle 14 which is formed of a transmittance material such as glass and has a circular opening and a sealing member 11 which is attached to the circular opening be welding and has a substantially cylindrical shaped cavity 5 and an exhaust pipe 8 formed at a center of the cavity 5, and so on. The power coupler 20 comprises a heat radiation cylinder 21 of a tubular shape which has an outer flange at a lower end thereof, ferrite cores 22 of tubular shape which are fixed in the vicinity of an upper end of the heat radiation cylinder 21, and an induction coil (an electric solenoid) 23 which is wound around outer peripheries of the ferrite cores 22 and generates induction electric field. Then, by inserting the heat radiation cylinder 21, the ferrite cores 22 and the induction coil 23 are inserted into inside of the cavity 5 in a manner so that the exhaust pipe 8 is inserted into inside of the ferrite cores 22, they are fitted into the cavity 5 so that the exhaust pipe 5 is disposed at the center of them, and thus, the power coupler 20 is attached to the bulb 10.

A cap 15 formed of a resin material or the like is attached to a bulb neck portion 19 in the vicinity of bottom of the bulb 10 by adhesion. An attaching structure such as a bayonet structure is provided on the cap and a pedestal of the power coupler 20 which are not illustrated, so that the bulb 10 integrated with the cap 15 is detachably mounted on the power coupler 20.

A projection 4, which serves as the coldest spot when lighting in a condition that the cap 15 is oriented upward (base-up lighting), is formed at a top of the bulb 10. A protection film 2 and a fluorescent material film 3 are applied to almost whole area of an inner peripheral surface of the airtight container receptacle 14 including the projection 4. In addition, the protection film 2 and a fluorescent material film 3 are applied to almost whole area of an outer peripheral surface of the sealing member 11 (a part of them are illustrated in the figure).

Rare gas such as argon or krypton is filled in inside of the bulb 10 so as to serve as a discharge space. In addition, a metal container 13 made of iron-nickel alloy is installed in inside of the exhaust pipe 8, and Zn-Hg which amounts about 20 mg and has a weight ratio at 50:50 is filled in inside of the metal container 13 so as to discharge mercury to control the mercury vapor pressure. Furthermore, a recess 9, at which the metal container 13 is fixed, is formed on an inner periphery of the exhaust pipe 8, and a glass rod 12 is provided in inside of the exhaust pipe 8.

The exhaust pipe 8 isused to exhaust air or the like from inside of the bulb 10, and thus, the lower end thereof is protruded outward from the bottom of the bulb 10. Under a state that the metal container 13 containing amalgam and the glass rod 12 are put in the bulb 10, inside of the bulb 10 is exhausted, the above mentioned rare gas is filled therein, and sealing the lower end of the exhaust pipe 8 by welding as a tip-off portion 16, so that the bulb 10 is sealed. In addition, the recesses 9 which protrude inward are formed at an upper portion and a mid portion of the exhaust pipe 8, and thus, the metal container 13 is held between the recess at the mid portion and the tip-off portion 16 via the glass rod 12.

In addition, an end portion of a support member 17, which is formed as reverse U-shape, is hooked at the recess 9 at the upper portion of the exhaust pipe 8. Furthermore, an auxiliary flag 18 for starting in dark place, to which a metallic compound of smaller work function (such as hydration cesium) is applied, is attached to the other end of the support member 17, which is guided from the exhaust pipe 8 to inside of the bulb 10. The auxiliary flag 18 for starting in dark place, to which a metallic compound is applied, shares a function to increase number of electrons at staring of the electrodeless discharge lamp 1.

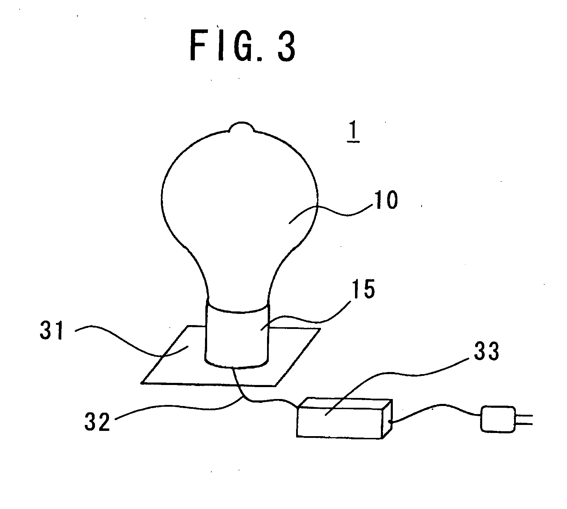

FIG. 3 shows an example of the lighting apparatus using the electrodeless discharge lamp 1 of this embodiment. The power coupler 20 (not illustrated) constituting the electrodeless discharge lamp 1 is fixed on a heatsink 31 and the heatsink 31 is installed on a ceiling, side wall, floor, or the like of a building. Ends of the induction coil 23 of the power coupler 20 are connected to a lighting circuit 33 via electric wires 32. Then, the bulb 10 which is integrated with the cap 15 is fitted to the power coupler 20, so that the lighting apparatus comprising the electrodeless discharge lamp 1 is constituted. Since the high-frequency electric current (sinusoidal current) which is supplied to the induction coil 23 of the power coupler has a relatively lower frequency of several hundreds kHz, the ferrite cores (magnetic cores) 22 are provided in inside the induction coil.

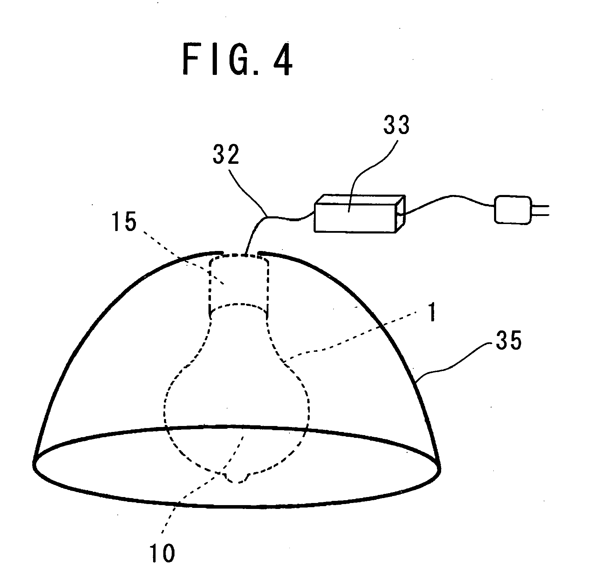

FIG. 4 shows another example of the lighting apparatus using the electrodeless discharge lamp 1 of this embodiment. In the lighting apparatus shown in FIG. 4, the electrodeless discharge lamp 1 is disposed so that light emitting area of the bulb 10 is located at a focal point of a reflector 35 such as a parabolic reflector. A front face of the reflector 35 may be opened or be put a transmittance panel thereto. In the latter case, it may be used at locations where lamp replacement may be difficult such as illumination in outdoor sports facility, for example, with taking advantage of longevity life characteristics of the electrodeless discharge lamp. In particular, in case of a sealed lighting apparatus, although the circumferential temperature of the electrodeless discharge lamp may be increased, a predetermined temperature at the coldest spot may be maintained with no relation to lighting direction, which will be described later, so that variation of light output can be restricted. Furthermore, even if PWM light control is performed, occurrence of oscillation can be decreased, and thus, undesired sound can be muted.

When high-frequency electric current is supplied to the induction coil 23 of the power coupler 20, high-frequency electromagnetic field occurs around the induction coil 23. Electrons in the mixture gas of mercury vapor and discharge gas filled in the inside of the bulb 10 are accelerated by this high-frequency electromagnetic field, so that electrolytic dissociation occurs due to collision of electrons, and thus, discharge occurs. While discharge continues, discharge gas filled in the inside of the bulb 10 is activated, and ultra-violet rays are generated when activated atoms come back to ground state. Such ultra-violet rays are converted to visible rays by fluorescent material film 3 applied to an inner peripheral surface of the bulb 10. Visible rays are emitted through the airtight container receptacle 14 of the bulb 10 to outside.

While the electrodeless discharge lamp 1 has been lit, temperature in the inside of the bulb 10 becomes higher due to heat of plasma. However, since the projection 4 is provided at the top of the bulb 10, when the electrodeless discharge lamp 1 is lit in a state that the cap 15 is oriented upward, the projection 4 serves as the coldest spot, and thus, vapor pressure in the airtight container receptacle 14 can be reduced. Alternatively, when the electrodeless discharge lamp 1 is lit in a state that the cap 15 is oriented downward, the portion just above the cap 15 can be set as the coldest spot by selecting the dimensions of the airtight container receptacle 14 in heightwise direction of the electrodeless discharge lamp 1, appropriately, and thus, vapor pressure in the airtight container receptacle 14 can be reduced.

The electrodeless discharge lamp 1 consisted as above is lit with light control that light output becomes 50% of that in rating lighting, and efficiency (inverse number of electric power which is necessary to obtain the above mentioned constant light output) and restriking voltage at that time were measured. Results are shown in table 1. At that time, PWM light control was adopted as the light control method so as to repeat ON-OFF of high-frequency lighting operation by intermittently supplying the high-frequency electric current to the induction coil 23 from lighting circuit. The lighting circuit 33 switched ON-OFF the high-frequency output at a constant frequency so as to increase or decrease a ration of ON time occupied in one period, and thus, light output of the lamp is increased or decreased. When OFF time in one period becomes longer, high voltage (restriking voltage) will be needed at restarting of the electrodeless discharge lamp 1.

| Case | Ar (Pa) | Kr (Pa) | (Σ(P×M)×r²) (×10⁶) | Efficiency (lm/W) | Restrike Voltage (V) |
|---|---|---|---|---|---|
| 1 | 20 | 0 | 53.7221 | 62.52 | 1857 |
| 2 | 16 | 4 | 65.5160 | 66.47 | 1632 |
| 3 | 4 | 16 | 100.8977 | 69.30 | 1330 |
| 4 | 0 | 20 | 112.6916 | 69.54 | 1345 |

In table 1, pressure of rare gas as the discharge gas was constant (20 Pa) in the cases 1 to 4. In addition, the discharge gas was only argon (Ar) and only krypton (Kr) in the cases 1 and 4, and the discharge gas was a mixture gas of argon and krypton in the cases 2 and 4, but the ration of filling quantity was changed.

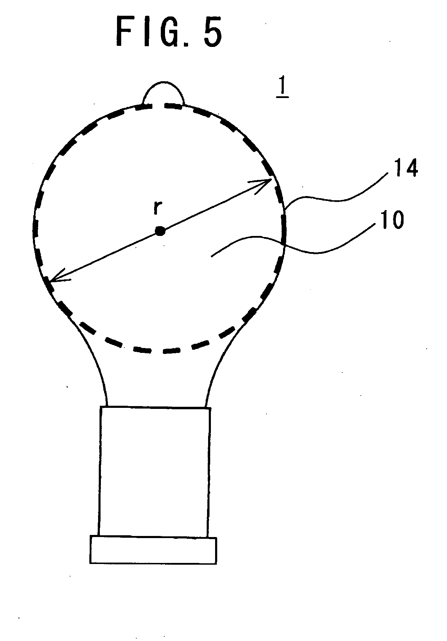

In a parameter (Σ(P×M)×r²), the symbol "P" designates gas-pressure of argon or krypton (unit: Pa), the symbol "M" designates atomic weight of them. The symbol "r" designates the diameter of the spherical portion of the airtight container receptacle 14 as show in FIG. 5. The symbol "Σ(P×M)" is considered the case of mixing argon and krypton.

When the efficiencies and the restriking voltages in respective cases 1 to 4 were compared, the efficiency was lower but the restriking voltage was higher in the case 1 in comparison with other cases. In other words, it was found that the efficiency become higher but the restriking voltage became lower in the cased 2 to 4 including krypton, in comparison with the case 1. From this phenomenon, it was found that inclusion of krypton in the discharge gas is effective to decrease the restriking voltage when the electrodeless discharge lamp 1 is lit with PWM light control.

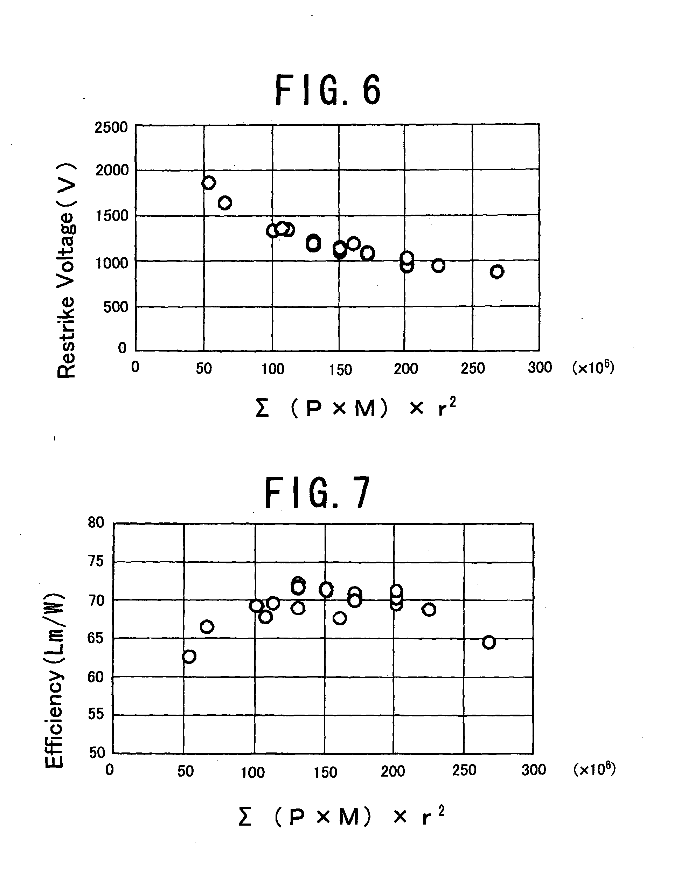

Subsequently, a plurality of bulbs 10 were manufactured (r=220 mm) that the mixture gas of argon and krypton was used as the discharge gas, pressure of the mixture gas was constant (20 Pa or 40 Pa), the pressure of argon was varied in a range of 4∼40 Pa (4, 16, 20 Pa, or 8, 32, 40 Pa) similar to the cases 2 to 4 in the above mentioned table 1, and pressure of argon was varied in a range of 0∼80% of the pressure of the mixture gas, and they were actually lit with PWM light control. Results are shown in FIGS. 6 and 7. In FIGS. 6 and 7, abscissas designate value of the parameter (Σ(P×M)×r²) and ordinates designate the restriking voltages and the efficiencies, respectively.

As can be seen from FIG. 6, in a region of the value of the parameter (Σ(P×M)×r²) equal to or larger than 65 ×10⁶, the restriking voltage became equal to or smaller than 1500 V. On the other hand, as can be seen from FIG. 7, in a region of the value of the parameter (Σ(P×M)×r²) from equal to or larger than 65 × 10⁶ to equal to or smaller than 250 × 10⁶, the efficiency became equal to or larger than 65%. From these phenomena, it was found that the restriking voltage can be decreased without damaging the efficiency not too, when the value of the parameter (Σ(P×M)×r²) is in a range of 60∼250 × 10⁶.

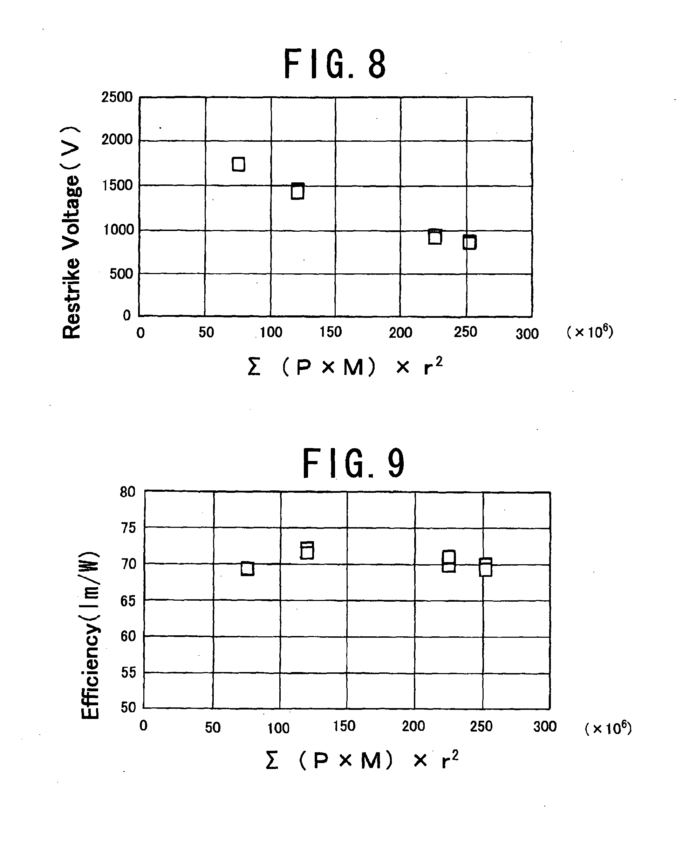

Similar to the above mentioned cases, an electrodeless discharge lamp 10 was manufactured that the diameter of the spherical portion of the airtight container receptacle 14 r=190 mm and total amount of Zn-Hg filled in the container receptacle 14 was 10 mg, it was lit with PWN light control so that light output became 50% of that in rating lighting, and restriking voltage and efficiency were measured. Results are shown in FIGS. 8 and 97. In FIGS. 8 and 9, abscissas designate value of the parameter (Σ(P×M)×r²) and ordinates designate the restriking voltages and the efficiencies, respectively. As can be seen from FIGS. 8 and 9, it was found that substantially the same effect was obtained even when the inner diameter of the spherical portion of the airtight container receptacle 14 of the bulb 10 was changed.

As mentioned above, according to this embodiment, by using only krypton or a mixture gas of argon and krypton as a discharge gas, when the electrodeless discharge lamp 1 is lit with PWM light control, not only the effect can be increased but also the rstriking voltage can be decreased. In addition, oscillation of the ferrite core 22 of the power coupler 20 inserted into the inside of the cavity 5 of the bulb 10 of the electrodeless discharge lamp 10 is reduced due to the decrease of the restriking voltage, and thus, undesired sound due to contact with other ferrite cores 22 which is separately disposed or the heat radiation cylinder 21 can be restrained.

The present invention is not limited to the above mentioned embodiment, and at least krypton should be included in a discharge gas, and it may be a mixture gas with rare gas other than argon. In addition, it is preferable that pressure of krypton should be equal to or larger than 20% of total pressure of the discharge gas.

## Claims

1. An electrodeless discharge lamp comprising a bulb formed of a transmittance material and filled by discharge gas and mercury therein, and a power coupler fitted into a cavity formed on the bulb and having an induction coil and a ferrite core for generating high-frequency electromagnetic field, wherein
the induction coil is driven by supplying high-frequency electric current which is controlled by PWM, and
the discharge gas filled in the bulb is only krypton or a mixture of krypton and another rare gas.

2. The electrodeless discharge lamp in accordance with claim 1, wherein
when gas-pressure of only krypton or a mixture gas of kryptone and another rare gas is designated by a symbol P (Pa), and atomic weight of it is designated by a symbol "M", and an inner diameter of the bulb is designated by a symbol r (mm),
a value calculated by a parameter (Σ(P×M)×r²) is in a range from equal to or larger than 65×10⁶ to equal to or smaller than 250×10⁶.

3. The electrodeless discharge lamp in accordance with claim 1, wherein pressure of krypton is equal to or larger than 20% of total pressure of the discharge gas.

4. The electrodeless discharge lamp in accordance with claim 3, wherein the above another rare gas is argon.

5. A lighting apparatus comprising:
an electrodeless discharge lamp comprising a bulb formed of a transmittance material and filled by discharge gas and mercury therein, and a power coupler fitted into a cavity formed on the bulb and having an induction coil and a ferrite core for generating high-frequency electromagnetic field, wherein the induction coil is driven by supplying high-frequency electric current which is controlled by PWM, and the discharge gas filled in the bulb is only krypton or a mixture of krypton and another rare gas; and
a lighting circuit to supply the high-frequency electric current which is controlled by PWM to the induction coil.

6. The lighting apparatus in accordance with claim 5, wherein
when gas-pressure of only krypton or a mixture gas of kryptone and another rare gas is designated by a symbol P (Pa), and atomic weight of it is designated by a symbol "M", and an inner diameter of the bulb is designated by a symbol r (mm),
a value calculated by a parameter (Σ(P×M)×r²) is in a range from equal to or larger than 65×10⁶ to equal to or smaller than 250×10⁶.

7. The lighting apparatus in accordance with claim 5, wherein pressure of krypton is equal to or larger than 20% of total pressure of the discharge gas.

8. The lighting apparatus in accordance with claim 7, wherein the above another rare gas is argon.
